# EUROPÄISCHE PATENTANMELDUNG

(11) **EP 4 848 546 A1**
(43) Veröffentlichungstag der Anmeldung: **02.12.2026**
(21) Anmeldenummer: 26169774.2
(22) Anmeldetag: 31.03.2026
(51) Int. Cl.: H02K 15/043

(54) **WELLENWICKELVORRICHTUNG UND VERFAHREN ZUR HERSTELLUNG VON WELLENWICKLUNGEN**

(30) Priorität: 28.05.2025 DE 102025121120
(71) Anmelder: Aumann Espelkamp GmbH, 32339 Espelkamp (DE)
(72) Erfinder: SMULCZYNSKI, Marc, Rahden (DE); ESAU, Nico, Espelkamp (DE)
(74) Vertreter: Schlegel, Sebastian

(57) **Zusammenfassung**

Es wird eine Wellenwickelvorrichtung zur Herstellung von Wellenwicklungen bereitgestellt, mit einer Wickeleinheit, welche eine um eine Wickelachse (A) in einer Wickelrichtung drehbaren Formkern (5) aufweist, auf den ein Wickeldraht (9) aufzuwickeln ist; wenigstens einer Drahtzuführeinrichtung, welche den Wickeldraht (9) in einer Zuführrichtung (Y) der Wickeleinheit zur Bewicklung des Formkerns (5) zuführt; und einer Transporteinrichtung, welche eingerichtet ist, den auf den Formkern (5) zu einer Wellenwicklung aufgewickelten Wickeldraht (9) in einer Transportrichtung (X) parallel zur Wickelachse (A) zu transportieren. Der Formkern (5) ist flach und trapezförmig ausgebildet, derart, dass sich eine senkrecht zu der Wickelachse (A) verlaufende Breite des Formkerns (5) entlang der Wickelachse (A) in der Transportrichtung (X) verringert. Die Breite des Formkerns (5) ist mittels einer Verstelleinrichtung veränderbar. Weiterhin ist ein Verfahren zur Herstellung von Wellenwicklungen geschaffen. (Fig. 8)

## Beschreibung

Die Erfindung betrifft eine Wellenwickelvorrichtung zur Herstellung von Wellenwicklungen sowie ein Verfahren zur Herstellung von Wellenwicklungen.

### Hintergrund

Wellenwicklungen werden unter anderem zur Herstellung von Statoren für Elektromotoren eingesetzt. Dabei wird der Wickeldraht, dies kann ein Runddraht oder auch ein Flachdraht sein, in der Regel über eine Zuführeinrichtung zugeführt und auf einem Wickelschwert aufgewickelt. Dabei müssen Wellen erzeugt werden. Dies geschieht dadurch, dass bei der Wicklung um das Schwert der Wickelvorgang unterbrochen und der Draht quer zur Zuführrichtung ausgelenkt werden muss, dann eine Drehung des Schwertes um 180° erfolgt, die Drehung wieder angehalten wird usw., damit man das charakteristische Wellenmuster erhält. Die hierdurch entstehenden Endbereiche (bezogen auf die Breite des Wickelschwerts) der Wellenwicklung werden als Wickelköpfe bezeichnet. Je nach gewünschter Verschaltung am Stator werden üblicherweise in solchen Wellenwicklungen eine Mehrzahl Drähte, beispielsweise 6 Drähte gleichzeitig zugeführt und gewickelt. Ein solches Verfahren zur Herstellung einer Spulenwicklung ist beispielsweise aus dem Dokument DE 10 2015 120 661 A1 bekannt.

Gemäß der Offenbarung des Dokuments EP 3 182 568 A1 ist eine Wellenwickelvorrichtung zur Herstellung von Wellenwicklungen mit einer Transporteinrichtung geschaffen, die dazu ausgelegt ist, den auf die Wickelschwerteinrichtung zu einer Wellenwicklung aufgewickelten Wickeldraht in einer Transportrichtung parallel zur Wickelachse zu transportieren. Die Transportvorrichtung weist dazu eine Förderanordnung auf, welche die Wellenwicklung durch die Transportvorrichtung in Transportrichtung bewegt. Die Förderanordnung selbst ist dabei um eine koaxial zur Wickelachse verlaufende Drehachse in der Wickelrichtung drehbar in der Transportvorrichtung gelagert. Bei der Erzeugung der Wellenwicklungen kann in Transportrichtung die entstehende Wickelmatte in jeder Drehstellung der Wickelschwerteinrichtung weiter transportiert werden, so dass im Prinzip die Fertigung beliebig langer Wickelmatten mit einem nur sehr kurzen Wickelschwert möglich ist.

In diesem Zusammenhang offenbart das Dokument EP 3 512 079 A1 eine Wellenwickelvorrichtung, die insbesondere eine Drahtmitführeinrichtung aufweist, welche dazu ausgelegt ist, eine oder eine Mehrzahl von auf dem Formkern liegenden(n) Wicklung(en) zu fassen und in Transportrichtung mitzuführen. Die Drahtmitführeinrichtung weist hierbei Folgendes auf: eine Mehrzahl loser Transportbackenelemente, welche jeweils über eine Mehrzahl Drahtaufnahmenuten verfügen, eine Transportbackenaufsetzeinrichtung, welche im Bereich des Formkerns angeordnet und dazu ausgelegt ist, die Transportbackenelemente auf den auf dem Formkern liegenden Wickeldraht aufzusetzen, eine Transportbackenaufnahmeeinrichtung, welche dazu ausgelegt ist, Transportbackenelemente aufzunehmen, und eine Transportbackenmitführeinrichtung, welche dazu ausgelegt ist, mit den Transportbackenelementen zusammenzugreifen und diese in Transportrichtung zu verschieben.

Die so hergestellten Wellenwicklungen können als flache Wickelmatte mit prinzipiell beliebiger Länge direkt in Nuten von Rotoren oder Statoren eingezogen oder in ein Übertragungswerkzeug überführt werden, das geometrisch mit dem Stator- oder Rotorkörper korrespondiert. Hierbei können, je nach Länge der Wickelmatte, auch mehrere Lagen ausgebildet werden, die dann in einem Rotor oder Stator eine mehrlagige Spulenwicklung ausbilden. Bei einem solchen mehrlagigen Einzug ändert sich der Radius der Spulenwicklung mit jeder Wellenwicklungslage. Hierdurch steigt der axiale Platzbedarf der Wickelköpfe der Wellenwicklung mit abnehmendem Einzugsradius. Dies führt zu einer kegelstumpfförmigen Geometrie der Wellenwicklung an den axialen Enden des Rotors oder Stators, welche einen erhöhten Platzbedarf bedingt, der zur Funktionalität des Rotors oder Stators keinen Beitrag leistet. Die Leistungsdichte sinkt.

Um diesem Umstand zu begegnen, wird in dem Dokument DE 10 2020 118 925 A1 vorgeschlagen, eine Wickelschablone axial entlang ihrer Längsachse mit zumindest zwei Wickelabschnitten mit unterschiedlichen Wickelbreiten auszubilden, um eine durchgehende Wellenwicklung aus mehreren parallelen Drähten zu erzeugen, die entlang ihres Verlaufs eine variierende Breite aufweist.

### Zusammenfassung

Aufgabe der Erfindung ist es, verbesserte Technologien für die Herstellung von Wellenwicklungen anzugeben, insbesondere mit einem effizienten Wickelvorgang und verbesserter Wickelkopfgeometrie.

Zur Lösung der Aufgabe ist eine Wickelvorrichtung zur Herstellung von Wellenwicklungen nach dem unabhängigen Anspruch 1 geschaffen. Weiterhin ist ein Verfahren zur Herstellung von Wellenwicklungen nach einem weiteren unabhängigen Anspruch bereitgestellt. Ausgestaltungen sind Gegenstand von abhängigen Ansprüchen.

Gemäß einem Aspekt ist eine Wellenwickelvorrichtung zur Herstellung von Wellenwicklungen geschaffen. Die Wellenwickelvorrichtung weist eine Wickeleinheit, wenigstens eine Drahtzuführeinrichtung sowie eine Transporteinrichtung auf. Wickeleinheit weist einen um eine Wickelachse in einer Wickelrichtung drehbaren Formkern auf, auf den ein Wickeldraht aufzuwickeln ist. Die wenigstens eine Drahtzuführeinrichtung führt den Wickeldraht in einer Zuführrichtung der Wickeleinheit zur Bewicklung des Formkerns zu. Die Transporteinrichtung ist eingerichtet, den auf den Formkern zu einer Wellenwicklung aufgewickelten Wickeldraht in einer Transportrichtung parallel zur Wickelachse zu transportieren. Der Formkern ist flach und trapezförmig ausgebildet, derart, dass sich eine senkrecht zu der Wickelachse verlaufende Breite des Formkerns entlang der Wickelachse in der Transportrichtung verringert. Zudem ist die Breite des Formkerns mittels einer Verstelleinrichtung veränderbar.

Gemäß einem weiteren Aspekt ist ein Verfahren zur Herstellung von Wellenwicklungen bereitgestellt, umfassend die Schritte: Bereitstellen einer Wellenwickelvorrichtung mit einer Wickeleinheit, welche eine um eine Wickelachse in einer Wickelrichtung drehbaren Formkern aufweist, und wenigstens einer Drahtzuführeinrichtung mit einer Zuführrichtung; Zuführen eines Wickeldrahts in der Zuführrichtung zur Bewicklung des Formkerns; Aufwickeln des Wickeldrahts auf den Formkern durch Drehen des Formkerns; Transportieren des auf den Formkern zu einer Wellenwicklung aufgewickelten Wickeldrahts in einer Transportrichtung parallel zur Wickelachse mittels einer Transporteinrichtung der Wellenwickelvorrichtung; Verändern der Breite des Formkerns mittels einer Verstelleinrichtung; und Wiederholen der Schritte des Zuführens, Aufwickelns, Transportierens und Verändern der Breite des Formkerns, bis eine vorbestimmte Anzahl von Wellenwicklungen hergestellt wurde.

Der Formkern kann insbesondere schwertförmig, also als sogenanntes Wickelschwert, ausgebildet sein und ein großes Verhältnis seiner Länge zu seiner Breite haben, während die Dicke möglichst klein ist.

Aufgrund der Trapezform des Formkerns kann der Transport des aufgewickelten Wickeldrahts in der Transportrichtung dadurch erleichtert sein, dass der Formkern bereits nach einer kurzen Bewegung nicht mehr an den Wellenwicklungen anliegt und so ein Klemmen, beziehungsweise eine Reibung reduziert ist.

Das Zuführen und das Aufwickeln des Wickeldrahts kann zur Bewicklung des Formkerns wenigstens teilweise zeitgleich erfolgen. Beispielsweise kann ein Zuführen von Wickeldraht mit einem Drehen des Formkerns gleichzeitig erfolgen, so dass sich der Wickeldraht an eine flache Seite des Formkerns anlegt. Alternativ kann vorgesehen sein, dass der Wickeldraht mittels Bewegung der Zuführeinrichtung während des Zuführens an die flache Seite des Formkerns angelegt wird. **In** beiden Fällen kann optional vorgesehen sein, dass zum Umlegen des Wickeldrahts um die die Breite des Formkerns begrenzende Außenkante des Formkerns der Formkern gedreht wird und gleichzeitig (weiter) Wickeldraht zugeführt wird, um eine ungewünschte Relativbewegung zwischen dem Wickeldraht und dem Formkern zu vermeiden.

Die wenigstens eine Drahtzuführeinrichtung kann in der Transportrichtung beweglich ausgebildet sein. Hierdurch kann ein Ausbilden von Wickelköpfen ermöglicht sein. Entsprechend kann, nach dem Zuführen des Wickeldrahts, ein Ausbilden von Wickelköpfen durch wechselseitiges axiales Versetzen der parallelen Spulendrähte mittels einer Bewegung der wenigstens einen Drahtzuführeinrichtung in der Transportrichtung vorgesehen sein. Das wechselseitige axiale Versetzen kann derart ausgestaltet sein, dass die Drahtzuführeinrichtung jeweils nach einer Drehung des Formkerns um 180 Grad axial bewegt wird und hierbei abwechselnd eine Bewegung um den gleichen Betrag in und entgegen der Transportrichtung erfolgt.

Entsprechend dem Verfahren zur Herstellung von Wellenwicklungen kann die Wellenwickelvorrichtung eingerichtet sein, den Wickeldraht in der Zuführrichtung zur Bewicklung des Formkerns zuzuführen; den Wickeldraht auf den Formkern durch Drehen des Formkerns aufzuwickeln; den auf den Formkern zu einer Wellenwicklung aufgewickelten Wickeldraht in der Transportrichtung parallel zur Wickelachse mittels der Transporteinrichtung der Wellenwickelvorrichtung zu transportieren; die Breite des Formkerns mittels der Verstelleinrichtung zu verändern; und die Schritte des Zuführens, Aufwickelns, Transportierens und Verändern der Breite des Formkerns zu wiederholen, bis eine vorbestimmte Anzahl von Wellenwicklungen hergestellt wurde. Hierfür kann die Wellenwickelvorrichtung eine Steuervorrichtung aufweist, welche die Komponenten der Wellenwickelvorrichtung entsprechend ansteuert. Insbesondere wird die Breite des Formkerns erst verändert, nachdem der Schritt des Transportierens des auf den Formkern zu einer Wellenwicklung aufgewickelten Wickeldrahts abgeschlossen ist. Bevorzugt umfasst das Drehen des Formkerns das Drehen des Formkerns um 180 Grad, so dass nach dem Herstellen einer halben Windung je Wickelstrang eine Breitenänderung des Formkerns erfolgt. Alternativ kann ein Drehen des Formkerns um 360 Grad vorgesehen sein, bevor die Breite des Formkerns verändert wird. In diesem Fall kann bereits nach einer Drehung um 180 Grad ein Ausbilden von Wickelköpfen erfolgen - insbesondere durch axiale Bewegung der Drahtzuführeinrichtung - ohne dass die Breite des Formkerns verändert wird, wobei bevorzugt nach Vollenden der Drehung um 360 Grad erneut Wickelköpfe ausgebildet werden.

In einer bevorzugten Ausführung erfolgt nach einem Aufwickeln durch Drehen des Formkerns um 180 Grad, also nach dem Herstellen einer Halbwindung, ein Transportieren des Wickeldrahts in der Transportrichtung um einen Weg, welcher der halben Länge eines Wickelstrangs entspricht. Hierbei umfasst ein Wickelstrang mehrere parallel zugeführte Drahtstränge des Wickeldrahts. Die Breite (bzw. Länge in Transportrichtung) des Wickelstrangs wird somit bestimmt durch die Anzahl der parallel geführten Drahtstränge (zum Beispiel 6, 12, 18 oder 24 Drähte) und die Teilung, also den Mittenabstand der Drahtstränge (Einzeldrähte) des Wickelstrangs. Anschließend wird die nächste Halbwindung hergestellt. Somit entsteht eine Luftspule - die Wellenwicklungen werden also nicht zunächst vollständig auf den Formkern aufgewickelt, bevor sie von diesem entfernt werden. Da ein Ausbilden von Wickelköpfen hierbei nur auf dem Formkern (Wickelschwert) möglich ist, werden nur voll ausgebildete Wickelköpfe abgeschoben. Hieraus ergibt sich eine feste Abfolge aus Rotationsbewegung des Formkerns, Formen von Wickelköpfen, Abschieben der Wickelmatte und Breitenänderung des Wickelschwerts.

Die Wellenwickelvorrichtung kann eingerichtet sein, die Breite des Formkerns jeweils derart zu verändern, dass nach dem Verändern die Breite des Formkerns an einem in der Transportrichtung vorderen Ende eines zu wickelnden Abschnitts von Wellenwicklungen gleich der vorherigen Breite des Formkerns an einem in der Transportrichtung hinteren Ende eines unmittelbar zuvor gewickelten Abschnitts von Wellenwicklungen ist. In einer solchen bevorzugten Ausgestaltung wird bei der Änderung der Breite des Formkerns die Breite um einen Betrag erhöht, der dem Breitenunterschied entspricht, der durch die Trapezform (also die Schräge) des Formkerns auf der bei dem vorherigen Zuführen und Aufwickeln bewickelten Länge verursacht wird. Somit werden dann Wellenwicklungen gewickelt, die in ihrer Breite kontinuierlich entsprechend der Steigung der Trapezform (Schräge) des Formkerns zunehmen, ohne dass Stufen entstehen. Es ergibt sich also eine kontinuierlich geschrägte (insbesondere in seitlicher Ansicht trapezförmige) Wickelmatte. In einer beispielhaften Ausführung kann die Steigung der Trapezform 0,4 mm auf die Länge des Formkerns (Wickelschwerts) betragen. Insbesondere kann vorgesehen sein, dass die Steigung der Trapezform sich aus der Geometrie des zu bewickelnden Rotors oder Stators ergibt, derart, dass sich ein Winkel für die Steigung der Trapezform aus der Differenz der kürzesten und der längsten benötigten Wickelkopfhöhe und der Länge der Wickelmatte berechnet.

Es kann vorgesehen sein, nach Herstellen der vorbestimmten Anzahl von Wellenwicklungen die Schritte des Zuführens, Aufwickelns, Transportierens nochmals zu wiederholen, ohne zuvor die Breite des Formkerns zu verändern. Hierbei kann auch ein mehrmaliges Widerholen des Zuführens, Aufwickelns, Transportierens vorgesehen sein, insbesondere so oft, bis eine (dann gestufte) Länge an Wellenwicklungen hergestellt ist, die einer Länge einer letzten (äußersten) Lage einer mit den Wellenwicklungen herzustellenden Spule entspricht. Somit kann also vorgesehen sein, dass die Höhe der Wickelköpfe über eine oder mehrere Lagen der herzustellenden Spule kontinuierlich ansteigt, um in der letzten Lage gestuft zu sein, wodurch sich die Höhe der Wickelköpfe sich dann in Summe nicht mehr erhöht. Es kann auch ein Pressen bei der Kopfformung vorgesehen sein, um die Stufigkeit einer solchen letzten Lage einzuebnen. Insbesondere kann mit einer Ausführung ohne Änderung der Breite des Formkerns für die letzte Lage eine besonders platzsparende Spulenanordnung herstellbar sein, da in der letzten Lage keine Zunahme der Wickelkopfhöhe mehr notwendig ist, um eine Radiusänderung zu einer nächsten Lage zu kompensieren.

Es kann vorgesehen sein, dass der Formkern ein entlang der Wickelachse verschiebbares Betätigungsbauteil mit einem Betätigungsabschnitt aufweist, welcher mit einer entlang der Wickelachse veränderlichen Breite ausgebildet ist, dass ein in der Breitenrichtung einen Abschluss des Formkerns bildendes erstes Randelement des Formkerns mit dem Betätigungsabschnitt wirkverbunden ist, wobei ein Kontaktpunkt der Wirkverbindung des ersten Randelements an einer ersten Außenkante des Betätigungsabschnitts anliegt, und dass der Betätigungsabschnitt bei einer Verschiebung des Betätigungsbauteils entlang der Wickelachse eine Relativbewegung entlang der Wickelachse zu dem ersten Randelement ausführt, so dass das erste Randelement entsprechend der sich an dem Kontaktpunkt verändernden Breite des Betätigungsabschnitts in der Breitenrichtung bewegt wird, so dass sich die Breite des Formkerns verändert. Unter dem Kontaktpunkt ist hierbei kein geometrischer Punkt ohne Flächenausdehnung zu verstehen, sondern ein in der Realität immer flächiger Bereich, in dem ein Kontakt zwischen den Komponenten vorliegt. In einer solchen Ausführung bildet ist an dem Betätigungsbauteil also ein Abschnitt, nämlich der Betätigungsabschnitt, mit einer veränderlichen Breite gebildet, der das erste Randelement bei Bewegung des Betätigungsbauteil nach außen drückt oder eine Bewegung nach innen des ersten Randelements zulässt. Hierbei bildet das ersten Randelement eine Außenkante des Formkerns, so dass sich die Gesamtbreite des Formkerns durch die Bewegung des ersten Randelements nach innen und außen verändert. Somit erfolgt das Wickeln um das erste Randelement herum, so dass dieses auch als Wickelleiste bezeichnet werden kann. Um die Trapezform des Formkerns bereitzustellen, weist das erste Randelement eine äußere Schräge auf.

Es kann ein Rückstellelement vorgesehen sein, welches eine Bewegung des ersten Randelements nach innen bewirkt, wenn eine solche Bewegung durch den Betätigungsabschnitt zugelassen wird, nämlich wenn sich das Betätigungsbauteil so bewegt, dass ein schmalerer Bereich des Betätigungsabschnitts als zuvor in Kontakt mit der Wirkverbindung tritt. Beispielsweise kann das Rückstellelement als Federelement ausgeführt sein.

Die Wirkverbindung kann dadurch gebildet sein, dass ein Abschnitt des ersten Randelements an dem Betätigungsabschnitt anliegt. Alternativ kann ein separates Kontaktelement vorgesehen sein, welches die Verbindung zwischen dem ersten Randelement und dem Betätigungsabschnitt herstellt. Der Kontaktbereich mit dem Betätigungsabschnitt kann ebenfalls geschrägt ausgeführt sein, um eine gewünschte Bewegungssteuerung des ersten Randelements zu erreichen.

Der Betätigungsabschnitt kann mit Bezug zu der Wickelachse spiegelsymmetrisch ausgeführt sein, wobei ein in der Breitenrichtung einen Abschluss des Formkerns bildendes zweites Randelement des Formkerns mit dem Betätigungsabschnitt wirkverbunden ist, das zweite Randelement dem ersten Randelement gegenüberliegt und ein Kontaktpunkt der Wirkverbindung des zweiten Randelements an einer der ersten Außenkante gegenüberliegenden zweiten Außenkante des Betätigungsabschnitts anliegt. bei einer Verschiebung des Betätigungsbauteils entlang der Wickelachse führt der Betätigungsabschnitt dann eine Relativbewegung entlang der Wickelachse zu dem zweiten Randelement aus, so dass das zweite Randelement entsprechend der sich an dem Kontaktpunkt verändernden Breite des Betätigungsabschnitts in der Breitenrichtung bewegt wird, so dass sich im Zusammenspiel mit der Bewegung des ersten Randelements die Breite des Formkerns verändert. Der Formkern kann mit dem ersten Randelement und dem zweiten Randelement symmetrisch aufgebaut sein. In diesem Fall liegt das Betätigungsbauteil mittig im Formkern und das erste und zweite Randelement sind symmetrisch hierum angeordnet. Im Zusammenhang mit der Funktion des zweiten Randelements gelten die obigen Erläuterungen zum und Ausführungsformen des ersten Randelements entsprechend.

Der Wickeldraht kann zur Bewicklung des Formkerns in mehreren Strängen durch jeweilige Düsen der wenigstens einen Drahtzuführeinrichtung parallel zugeführt werden. Hierbei kann eine Drahtzuführeinrichtung mehrere Düsen aufweisen. Ebenso können mehrere Drahtzuführeinrichtung mit jeweils einer oder mehreren Düsen vorgesehen sein. Insbesondere können mehrere Drahtzuführeinrichtungen einen oder mehrere jeweilige Stränge des Wickeldrahts aus unterschiedlichen Richtungen an den Formkern zuführen.

Ein Abstand zwischen den Düsen der wenigstens einen Drahtzuführeinrichtung kann veränderbar sein, so dass ein Abstand zwischen den mehreren Strängen einstellbar ist. Auf diese Weise kann es ermöglicht sein, den Abstand zwischen Windungen der herzustellenden Wellenwicklungen an einen zu bewickelnden Rotor oder Stator anzupassen. Hierbei kann der Abstand zwischen Düsen derselben Drahtzuführeinrichtung und/oder der Abstand zwischen Düsen verschiedener Drahtzuführeinrichtungen einstellbar sein.

Alternativ oder zusätzlich kann die Wellenwickelvorrichtung wenigstens ein Führungselement aufweisen, welches eingerichtet ist, die mehreren Stränge derart zu führen, dass sich beim Zuführen zur Bewicklung des Formkerns ein Abstand zwischen den mehreren Strängen im Vergleich zu dem Abstand zwischen den Düsen der wenigstens einen Drahtzuführeinrichtung ändert und die mehreren Stränge mit dem veränderten Abstand zueinander aufgewickelt werden. Hierbei kann das oder die Führungselemente verstellbar ausgeführt sein, um verschiedene Abstände zwischen den Strängen einstellen zu können. Alternativ oder zusätzlich können mehrere nach Bedarf austauschbare Führungselemente zum Einstellen unterschiedlicher Abstände zwischen den Strängen vorgesehen sein.

Die Wellenwickelvorrichtung kann wenigstens ein Schiebeelement aufweisen, welches auf den Formkern aufschiebbar ist, um so die Breite des Formkerns zu verändern. Das oder die Schiebelemente können insbesondere in Breitenrichtung außen auf den Formkern aufschiebbar sein und weisen in diesem Fall eine Schräge auf, um die Trapezform des Formkerns bereitzustellen. Mit dem oder den Schiebeelementen kann ein Breitenbereich verändert werden, innerhalbe dessen sich die Breite des Formkerns verändern lässt, ohne dass hierfür der Mechanismus der Breitenveränderung angepasst werden müsste. Bevorzugt können an dem Formkern in Breitenrichtung beidseitig gleichartige Schiebeelemente vorgesehen sein, um eine symmetrische Ausgestaltung des Formkerns sicherzustellen.

Es kann, nach dem Herstellen der vorbestimmten Anzahl von Wellenwicklungen (und gegebenenfalls von zusätzlichen Wellenwicklungen, die ohne eine Breitenänderung des Formkerns hergestellt wurden), ein Überführen der Wellenwicklungen in ein Übertragungswerkzeug für den Einzug der Wellenwicklungen in Nuten eines Stator- oder Rotorkörpers vorgesehen sein. Alternativ kann eine Übertragung direkt in Nuten eines Stator- oder Rotorkörpers vorgesehen sein. In beiden Fällen werden hierbei die Wellenwicklungen dann vollständig vom Formkern abgestreift. Bezüglich der Übertragung in Nuten eines Stator- oder Rotorkörpers mit oder ohne Übertragungswerkzeug können als solche bekannte Ausführungen vorgesehen sein, wie sie beispielsweise in den Dokumenten DE 10 2015 120 661 A1, DE 10 2020 118 925 A1 und EP 3 512 079 A1 beschrieben sind.

Die vorangehend im Zusammenhang mit der Wellenwickelvorrichtung beschriebenen Ausführungen können für das Verfahren zur Herstellung von Wellenwicklungen entsprechend vorgesehen sein und umgekehrt. Insbesondere kann eine Steuervorrichtung der Wellenwickelvorrichtung eingerichtet sein, Komponenten der Wellenwickelvorrichtung gemäß den Schritten des Verfahrens in seinen verschiedenen Ausführungen anzusteuern.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1A und 1B: eine Wickelmatte für die Herstellung von Statoren oder Rotoren gemäß dem Stand der Technik;
- Fig. 2A und 2B: eine offenbarungsgemäße Wickelmatte für die Herstellung von Statoren oder Rotoren;
- Fig. 3: eine schematische Darstellung eines verstellbaren Wickelschwerts für die Herstellung von Wellenwicklungen mit hierauf angeordneten Wellenwicklungen;
- Fig. 4: eine schematische Darstellung eines verstellbaren Wickelschwerts für die Herstellung von Wellenwicklungen;
- Fig. 5: eine schematische Darstellung eines demontierten Wickelschwerts für die Herstellung von Wellenwicklungen;
- Fig. 6A, 6B, 6C: schematische Darstellungen unterschiedlicher Betriebszustände eines verstellbaren Wickelschwerts;
- Fig. 7: eine schematische Darstellung einer Baugruppe mit verstellbarem Wickelschwert und Antriebsanordnung in Rückansicht;
- Fig. 8: eine schematische Darstellung einer Baugruppe mit verstellbarem Wickelschwert und Antriebsanordnung in Vorderansicht;
- Fig. 9: eine schematische Darstellung einer Anlage für die Herstellung von Wellenwicklungen; und
- Fig. 10A, 10B: schematische Darstellungen von Segmentbacken für eine Wellenwickelvorrichtung.

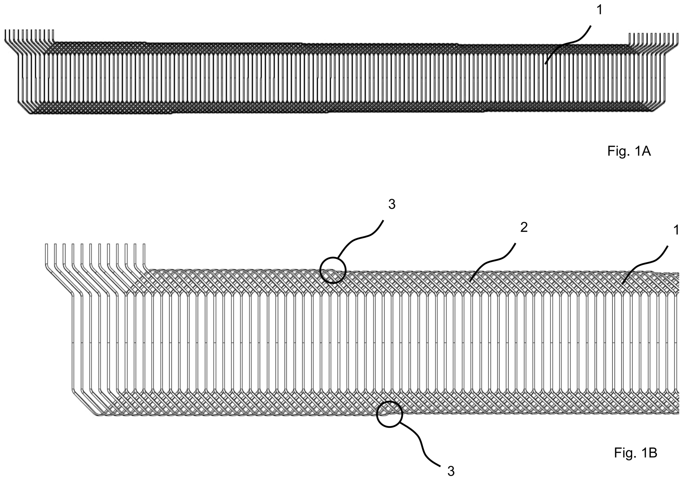

Die Figur 1A zeigt eine vorbekannte Wickelmatte 1, wie sie beispielsweise unter Verwendung der aus dem Dokument DE 10 2020 118 925 A1 bekannten Wickelschablone hergestellt werden kann. Wie insbesondere in der Detailansicht der Wickelmatte 1 in der Fig. 1B erkennbar ist, entstehen hierbei aufgrund der variierenden Wickelbreiten der Wickelschablone im Bereich der Wickelköpfe 2 Stufen 3, so dass die Wickelmatte mit stufenweise (in der Fig. 1A von links nach rechts) abnehmender Breite gebildet ist.

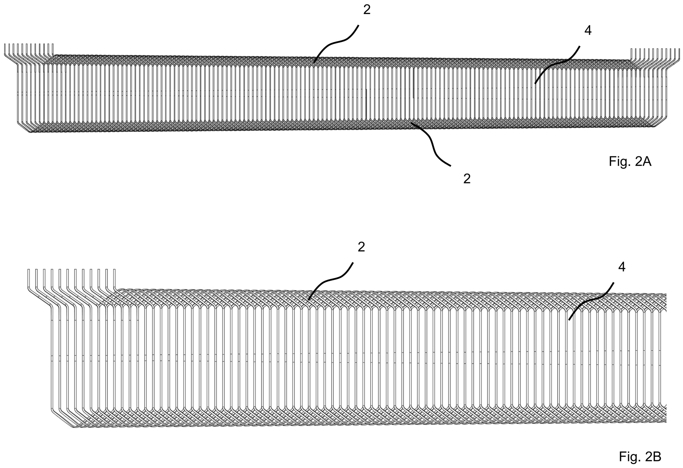

Im Vergleich hierzu zeigt die Fig 2A eine Wickelmatte 4, die mit einer offenbarungsgemäßen Wellenwickelvorrichtung hergestellt ist. Hierbei ist die Wickelmatte 4 mit in der Fig. 2A von links nach rechts kontinuierlich abnehmender Breite gebildet. In der Fig. 2B ist erkennbar, dass dies ohne eine Bildung von Stufen erreicht ist.

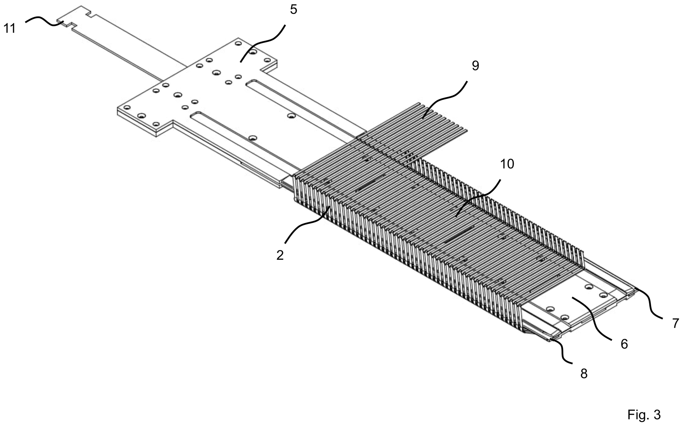

Die Fig. 3 zeigt einen offenbarungsgemäßen Formkern 5 in Form eines Wickelschwerts mit variabler Breite. Das Wickelschwert ist mit einem Grundkörper 6 gebildet. An dem Grundkörper 6 sind zwei Wickelleisten angeordnet, die ein erstes Randelement 7 und ein zweites Randelement 8 bilden, um welche ein Wickeldraht 9 zum Herstellen von Wellenwicklungen 10 gewickelt wird. Im in der Fig. 3 gezeigten Beispiel wird der Wickeldraht 9 in zwölf Strängen zugeführt, die gleichzeitig um das Wickelschwert und hierbei im Kantenbereich um die Randelemente 7, 8 gewickelt werden. Die Breite des Formkerns 5 lässt sich über ein Betätigungsbauteil 11 ändern, welches in der gezeigten Ausführung als Schieber ausgeführt ist, dessen Verschieben entlang der Längsachse des Formkerns 5 eine Breitenänderung derart bewirkt, dass sich das erste Randelement 7 und das zweite Randelement 8 quer zu der Längsachse bewegen, nämlich voneinander und von der Mittelachse des Formkerns weg für ein Vergrößern der Breite und zueinander sowie zu der Mittelachse hin für ein Verkleinern der Breite.

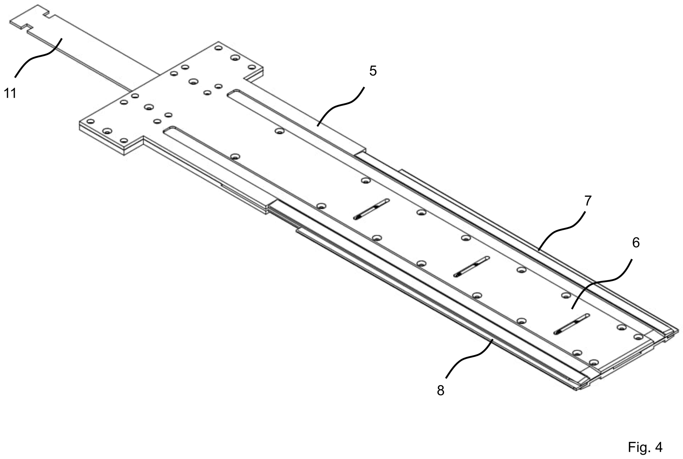

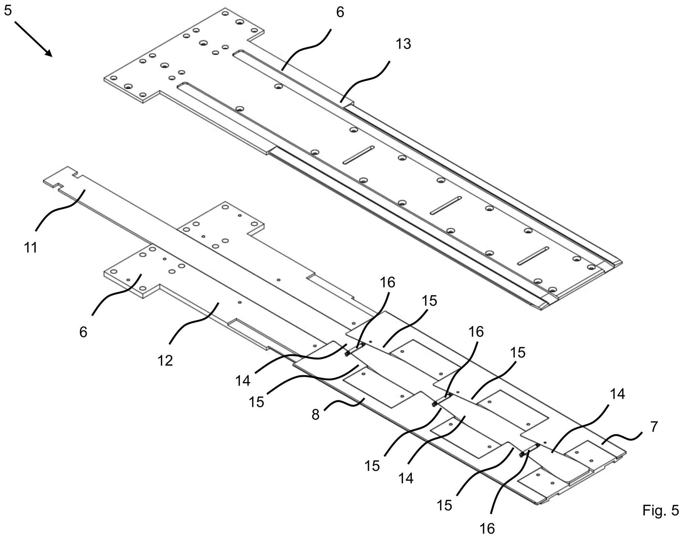

Die Fig. 4 zeigt den Formkern 5 ohne hierauf angeordneten Wickeldraht 9. Der offenbarungsgemäße Formkern 5 mit variabler Breite weist im Bereich der Randelemente 7, 8 eine Schrägung auf, derart, dass sich der Formkern zu seinem dem Betätigungsbauteil abgewandten Ende (in den Figuren 4 und 5 rechts) hin verjüngt. Die Schrägung ist in der vorliegenden Ausführungsform gering ausgeprägt, in dem gezeigten Beispiel beträgt sie etwa 0,223 Grad, entsprechend einer Verjüngung des Formkerns um 0,4 mm über die Länge der Randelemente 7, 8. Dennoch reicht die Verjüngung, um ein Abstreifen von gewickelten Wellenwicklungen 10 von dem Formkern 5 zu vereinfachen, da eine Eigenspannung des Wickeldrahts 9 schon nach einer kurzen Abzugsbewegung zum dem Betätigungsbauteil abgewandten Ende hin verringert wird. Hierdurch kann insbesondere beim Weitertransport der Wickelmatte 4 vom Wickelschwert die Gefahr einer Drahtbeschädigung durch Verklemmen der Wickelmatte 4 auf dem Wickelschwert verringert sein.

In der Fig. 5 ist ein Formkern 5 mit variabler Breite in demontiertem Zustand gezeigt. Es ist erkennbar, dass der Grundkörper 6 zweiteilig mit einem ersten Grundkörperbauteil 12 und eine zweiten Grundkörperbauteil 13 gebildet ist. Die Randelemente 7, 8 sind an dem ersten Grundkörperbauteil 12 angeordnet und das zweite Grundkörperbauteil 13 ist als Abdeckbauteil ausgebildet, welches auf dem ersten Grundkörperbauteil 12 angeordnet und mit diesem verbunden wird, um den Formkern 5 zu montieren.

Das Betätigungsbauteil 11 ist mit entlang der Längsachse des Formkerns 5 veränderlicher Breite ausgebildet. Hierbei weist das Betätigungsbauteil Betätigungsabschnitte 14 mit als Schrägen ausgebildeten Außenkanten auf, welche mit entsprechenden Verbindungsabschnitten 16 mit Schrägen des ersten Randelement 7 und des zweiten Randelements 8 in Kontakt stehen und so eine Wirkverbindung ausbilden. Hierbei stehen die schrägen Kanten von Betätigungsabschnitten 14 und Verbindungsabschnitten 16 miteinander in Kontakt und verlaufen bei einer Bewegung des Betätigungsbauteils 11 entlang seiner Längsachse aufeinander, so dass diese Relativbewegung eine Bewegung der Randelemente 7, 8 quer zu der Längsrichtung des Wickelschwerts verursacht. Hierbei drückt das Betätigungsbauteil die Randelemente 7, 8 nach außen, wenn durch die Bewegung breitere Bereiche der Betätigungsabschnitte 14 mit den Verbindungsabschnitten 15 in Kontakt treten, wodurch die Breite des Formkerns 5 erhöht wird. Treten durch die durch die Bewegung schmalere Bereiche der Betätigungsabschnitte 14 mit den Verbindungsabschnitten 15 in Kontakt, ist eine Bewegung der Randelemente 7, 8 nach innen ermöglicht, was eine Verringerung der Breite des Formkerns 5 bedeutet. Um diese Bewegung nach innen zu bewirken, weist der Formkern 5 Rückstellelemente 16 auf, welche eine rückstellende Federkraft nach innen auf die Randelemente 7, 8 ausüben. Insbesondere können als Rückstellelemente 16 Zugfedern vorgesehen sein. In alternativen Ausgestaltungen ist eine kurvengesteuerte Rückstellung durch eine entsprechende Formgebung des das Betätigungsbauteil 11 und/oder die Randelemente möglich, beispielsweise in Form einer Kulissenführung.

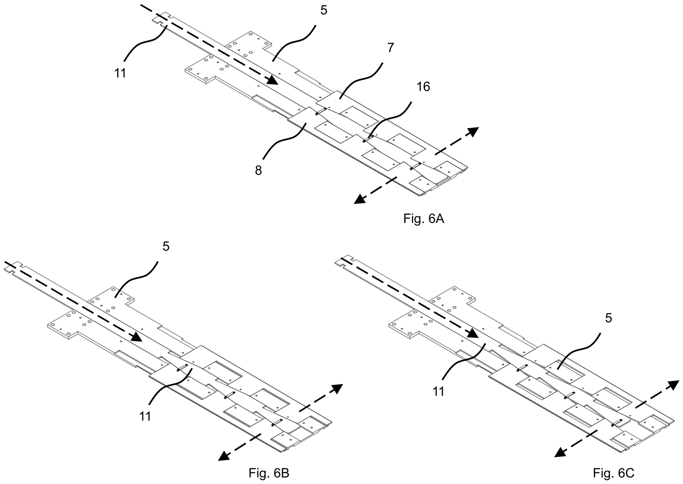

Die Figuren 6A, 6B und 6C veranschaulichen die Breitenverstellung des Formkerns 5 mittels Betätigung des Betätigungsbauteils 11. Hierbei befinden sich das erste Randelement 7 und das zweite Randelement 8 im Zustand gemäß Fig. 6A in der vollständig eingefahrenen Stellung, so dass der Formkern seine minimale Breite aufweist. Durch Bewegung des Betätigungsbauteils 11 in der mittels eines Pfeils angedeuteten Richtung werden dann die Randelemente 7, 8 nach außen bewegt, wie ebenfalls durch Pfeile angedeutet. Im Zustand gemäß der Fig. 6C haben dann die Randelemente ihre vollständig ausgefahrene Stellung erreicht, so dass der Formkern seine maximale Breite aufweist. Die Fig. 6B zeigt eine Zwischenstellung. Für eine Verringerung der Breite des Formkerns wird entsprechend das Betätigungsbauteils 11 entgegen der Pfeilrichtung gemäß Figuren 6A, 6B, 6C bewegt, so dass sich die Randelemente 7, 8 unter Wirkung der Rückstellelemente 16 nach innen bewegen.

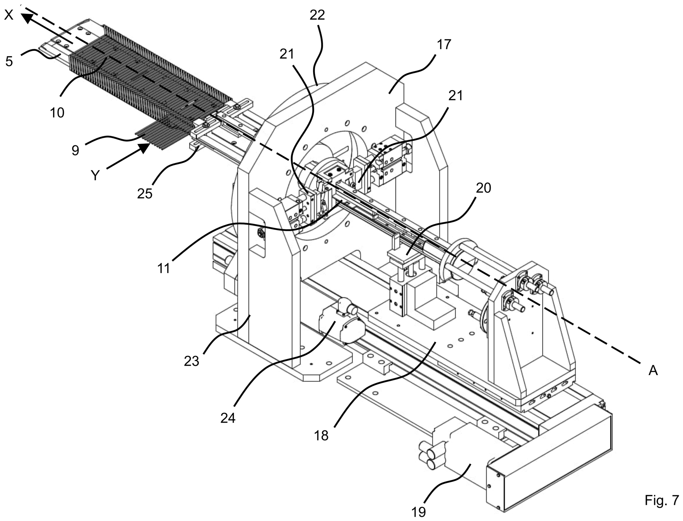

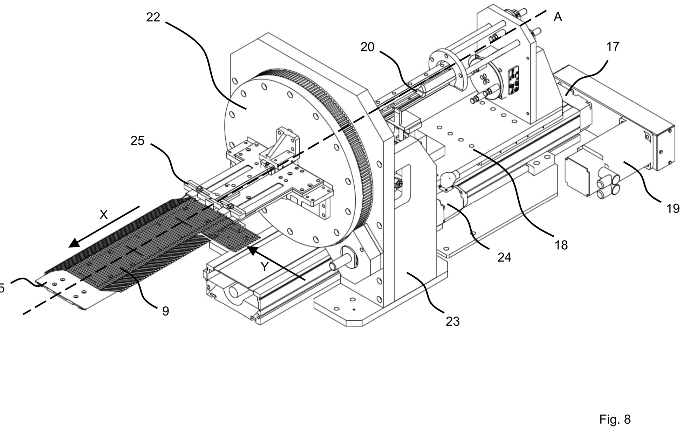

In der Fig. 7 ist eine Anordnung eines verstellbaren Formkerns 5 mit einer Antriebsanordnung 17 in Rückansicht dargestellt. Die Fig. 8 zeigt die entsprechende Vorderansicht Die Antriebsanordnung 17 umfasst einen Verstellschlitten 18, der mittels eines Motors 19 zu einer Bewegung entlang der Längsrichtung des Formkerns angetrieben wird. Durch ein Koppelsystems 20 ist der Verstellschlitten 18 mit dem Betätigungsbauteil 11 verbunden, so dass eine Bewegung des Verstellschlittens 18 entlang der Längsrichtung des Formkerns 5 auf das Betätigungsbauteil 11 übertragen wird, so dass mittels Bewegung des Verstellschlittens 18 die Breite des Formkerns 5 einstellbar ist. Weiterhin weist die Antriebsanordnung 17 links- und rechtsseitig des Betätigungsbauteils 11 einen jeweiligen Klemmschieber 21 auf, mit dem das Betätigungsbauteil 11 fixiert werden kann, um so die Breite des Wickelschwerts, also des Formkerns 5, während zumindest eines Teils einer Wickelbewegung unveränderlich zu halten.

Die Antriebsanordnung 17 weist zudem eine Aufnahmeeinrichtung 22 auf, mittels welcher der Formkern 5 an der Antriebsanordnung 17 aufgenommen ist. Die Aufnahmeeinrichtung 22 ist an einem Lagerbock 23 gelagert und mittels eines Motors 24 an dem Lagerbock 23 um die Längsachse des aufgenommenen Formkerns 5 drehbar. Hierdurch ist somit der Formkern 5 drehbar, um das Wickeln des Wickeldrahts 9 um den Formkern 5 zur Herstellung von Wellenwicklungen 10 zu ermöglichen.

Eine Vorschubeinheit 25 ist eingerichtet, auf den Formkern 5 aufgewickelte Wellenwicklungen 10 aus Wickeldraht 9 von dem Formkern herunterzuschieben. Durch die Schrägung des Formkerns 5 ist hierbei bereits nach einer geringen Abschiebe-Bewegung der Wickeldraht 9 nur noch locker um den Formkern 5 gelegt, so dass das Abschieben erleichtert ist. Die Vorschubeinheit 25 wird ebenfalls über den Motor 19 angetrieben.

Gemäß den obigen Ausführungen ist somit entlang der Längsachse des Formkerns 5 bzw. Wickelschwerts einen Wickelachse A gebildet, um welche sich der Formkern 5 zum Wickeln von Wellenwicklungen 10 drehen kann. Parallel zu der Wickelachse A verläuft eine Transportrichtung X, in welcher der gewickelte Wickeldraht 9 mittels der Vorschubeinheit 25 von dem Formkern 5 geschoben wird. Der Wickeldraht 9 wird zum Wickeln entlang einer Zuführrichtung Y zugeführt, welche in dem Ausführungsbeispiel der Figuren 7 und 8 senkrecht zu der Transportrichtung X verläuft. In alternativen Ausführungen kann die Zuführrichtung Y anders zu der Transportrichtung X ausgerichtet sein, beispielsweise schräg, und/oder es kann Wickeldraht 9 aus mehreren Richtungen zugeführt werden.

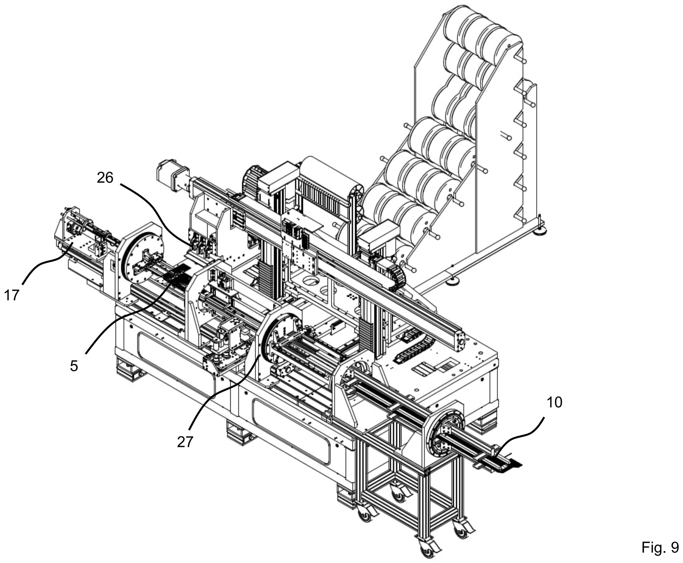

Die Fig. 9 zeigt eine Wellenwickelvorrichtung, bei der eine Antriebsanordnung 17 gemäß der vorangehenden Beschreibung mit hierin angeordnetem Formkern 5 in einer Anlage angeordnet ist. Wickeldraht 9 wird über eine Drahtzuführeinrichtung 26 zugeführt und auf dem Formkern 5 gewickelt. Die so hergestellten Wellenwicklungen 10 werden über eine Transportstrecke 27 aus der Anlage heraus und der weiteren Verwendung zugeführt. Insbesondere kann vorgesehen sein, die Wellenwicklungen 10 in Form einer Wickelmatte 4 einem Rotor oder Stator zuzuführen, in dessen Nuten die Wickelmatte 4 dann eingelegt wird, insbesondere mehrlagig, um eine Spule zu bilden. Hierbei kann die Wickelmatte 4 dem Rotor oder Stator direkt oder unter Nutzung eines Übertragungswerkzeugs zugeführt werden.

Für das Herstellen von Wellenwicklungen wird mittels der Drahtzuführeinrichtung 26 Wickeldraht 9 entlang der Zuführrichtung Y zu dem Formkern 5 geführt. In der zum Beispiel in der Fig. 3 gezeigten Ausführung geschieht dies durch Zuführen von zwölf Drahtsträngen mittels der Drahtzuführeinrichtung 26. Durch Drehen des Formkerns 5 um 180 Grad um die Wickelachse A mittels der angetriebenen Aufnahmeeinrichtung 21 wird der Wickeldraht anschließend auf den Formkern 5 aufgewickelt. Durch Verschieben der Drahtzuführeinrichtung 26 entlang der Transportrichtung X werden Wickelköpfe 2 einer Wickelmatte geformt. Die entstandenen zwölf halben Windungen werden von der Vorschubeinheit 25 von dem Formkern abgeschoben. Anschließend wird die Breite des Formkerns 5 wie vorangehend im Einzelnen beschrieben durch Bewegen des Betätigungsbauteils 11 erhöht und zwar in dem vorliegenden Ausführungsbeispiel um einen Wert, welcher dem durch die Schrägung des Formkerns 5 bedingten Breitenunterschied auf der abgeschobenen Länge - also dem Transportweg entlang der Transportrichtung X - entspricht. Somit weist der Formkern nach der Breitenänderung an der ausgehend von der Aufnahmeeinrichtung 22 am weitesten proximal gelegenen Stelle der bereits hergestellten Wellenwicklungen 10 diejenige Breite auf, die er unmittelbar vor dem Abschieben an dieser Stelle der bereits hergestellten Wellenwicklungen 10, welche an anderer Stelle auf dem Formkern 5 lag, aufwies. Anschließend wir der Formkern wiederum in derselben Richtung um 180 Grad um die Wickelachse A gedreht, wodurch ein weiterer Satz (entsprechend der Anzahl zugeführter Drahtstränge) halber Wellenwicklungen hergestellt wird. Hierauf werden durch Verschieben der Drahtzuführeinrichtung 26 entgegen der Transportrichtung X weitere Wickelköpfe 2 der Wickelmatte geformt und gleichzeitig die Drahtzuführeinrichtung 26 in ihre (axiale) Ausgangsstellung zurückgebracht.

Durch Wiederholung dieser Schritte wird eine Wickelmatte 4 mit kontinuierlich zunehmender Breite hergestellt, bis eine gewünschte bzw. vorbestimmte Anzahl an Wellenwicklungen 10 erreicht ist. Dies kann die Anzahl an Wellenwicklungen 10 sein, welche für das Bestücken eines Rotors oder Stators mit einer mehrlagigen Spule vorgegebener Spezifikationen notwendig ist.

Alternativ kann vorgesehen sein, dass die gewünschte Anzahl an Wellenwicklungen 10 so gewählt ist, dass dies einer Spulenlage weniger als für die Spule vorgesehen entspricht. Anschließend kann dann die letzte Spulenlage durch Wickeln wie zuvor beschrieben hergestellt werden, jedoch ohne, dass die Breite des Formkerns 5 zuvor verändert wird. Auf diese Weise entsteht eine Wickelmatte 4, die über mehrere herzustellende Spulenlagen kontinuierlich ohne Stufen ihre Breite verändert, jedoch am Übergang zur letzten Spulenlage eine stufenartige Breitenänderung aufweist, wobei dann die letzte Spulenlagen wieder kontinuierlich ihre Breite ändert. Somit entspricht dann die Breite am Ende der hergestellten Wellenwicklungen 10 der maximalen Breite der Wellenwicklungen 10 am Übergang zur letzten Spulenlage.

Mittels des offenbarungsgemäßen Formkerns 5 können Wickelmatten 4 mit unterschiedlichen (über die Länge nicht konstanten) Nennbreiten hergestellt werden, wobei die Grenzen durch den Verstellbereich der Randelemente 7, 8 bestimmts sind. Eine Anpassung dieser Grenzen kann dadurch ermöglicht sein, dass sich an dem Formkern 5 Aufsätze oder Schieber anordnen lassen, welche die Breite des Formkerns erhöhen. Der Unterschied zwischen maximaler und minimaler Breite des Formkerns 5 bleibt hierdurch unberührt, jedoch wird der Wert sowohl der maximalen als auch der minimalen Breite um die durch den/die Aufsätze/Schieber vorgegebenen Wert erhöht.

Die Länge einer Halbwicklung ist bei der Ausführung gemäß der Fig. 9 maßgeblich dadurch bestimmt, in welchem axialen Abstand Wickeldüsen der Drahtzuführeinrichtung 26, welche jeweils einen Drahtstrang zuführen, angeordnet sind, da die Drahtstränge in diesem Abstand (sogenannte Teilung) auf dem Formkern 5 aufgewickelt werden. Der Abstand der Wickeldüsen ist einstellbar, um die Teilung, als den Abstand der Drahtstränge in der Wickelmatte 4 einzustellen. Die Teilung kann hierbei auch während des Wickelns variiert werden, so dass sie sich entlang der Wickelmatte 4 ändert. Zusätzlich oder alternativ zu einem verstellbaren Abstand von Wickeldüsen kann vorgesehen sein, die Teilung mittels Führungselementen, beispielsweise ausgeführt als Segmentbacken, zu beeinflussen. Hierbei können die Führungselemente selbst flexibel einstellbar und/oder austauschbar sein, um eine gewünschte Teilung zu erreichen.

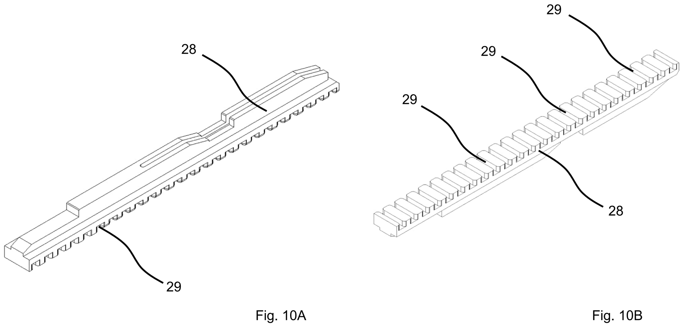

Die Figuren 10A und 10B zeigen derartige als Segmentbacken 28 ausgeführte Führungselemente, wobei die Fig. 10A eine Oberseite und die Fig. 10B eine Unterseite darstellt. Auf der dem Wickelkern zugewandten Seite befinden sich die Nuten 29 für die Drahtstränge des Wickeldrahts 9. Die Teilung der Nuten entspricht hierbei der Teilung der Einzeldrähte (Drahtstränge). Somit müssen die eingesetzten Segmentbacken der Teilung der Einzeldrähte entsprechen und ausgetauscht werden, wenn diese verändert wird. Die Ausläufe der Nuten 29 sind verrundet und bilden beim Wickelschritt eine Biegekante für den Draht 9. Die Nutenzahl entspricht bevorzugt der doppelten Anzahl der Drahtstränge.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichenliste

- 1: Wickelmatte
- 2: Wickelköpfe
- 3: Stufen
- 4: Wickelmatte
- 5: Formkern
- 6: Grundkörper
- 7: erstes Randelement
- 8: zweites Randelement
- 9: Wickeldraht
- 10: Wellenwicklungen
- 11: Betätigungsbauteil
- 12: erstes Grundkörperbauteil
- 13: zweites Grundkörperbauteil
- 14: Betätigungsabschnitt
- 15: Verbindungsabschnitt
- 16: Rückstellelement
- 17: Antriebsanordnung
- 18: Verstellschlitten
- 19: Motor
- 20: Koppelsystem
- 21: Klemmschieber
- 22: Aufnahmeeinrichtung
- 23: Lagerbock
- 24: Motor
- 25: Vorschubeinheit
- 26: Drahtzuführeinrichtung
- 27: Transportstrecke
- 28: Segmentbacken
- 29: Nut

- A: Wickelachse
- X: Transportrichtung
- Y: Zuführrichtung

## Patentansprüche

1. Wellenwickelvorrichtung zur Herstellung von Wellenwicklungen (10), mit
- einer Wickeleinheit, welche eine um eine Wickelachse (A) in einer Wickelrichtung drehbaren Formkern (5) aufweist, auf den ein Wickeldraht (9) aufzuwickeln ist;
- wenigstens einer Drahtzuführeinrichtung (26), welche den Wickeldraht (9) in einer Zuführrichtung (Y) der Wickeleinheit zur Bewicklung des Formkerns (5) zuführt; und
- einer Transporteinrichtung, welche eingerichtet ist, den auf den Formkern (5) zu einer Wellenwicklung aufgewickelten Wickeldraht (9) in einer Transportrichtung (X) parallel zur Wickelachse (A) zu transportieren,
wobei
- der Formkern (5) flach und trapezförmig ausgebildet ist, derart, dass sich eine senkrecht zu der Wickelachse (A) verlaufende Breite des Formkerns (5) entlang der Wickelachse (A) in der Transportrichtung (X) verringert; und
- die Breite des Formkerns (5) mittels einer Verstelleinrichtung veränderbar ist.

2. Wellenwickelvorrichtung nach Anspruch 1, die wenigstens eine Drahtzuführeinrichtung (26) in der Transportrichtung (X) beweglich ausgebildet ist.

3. Wellenwickelvorrichtung nach Anspruch 1 oder 2, wobei die Wellenwickelvorrichtung eingerichtet ist,
- den Wickeldraht (9) in der Zuführrichtung (Y) zur Bewicklung des Formkerns (5) zuzuführen;
- den Wickeldraht (9) auf den Formkern (5) durch Drehen des Formkerns (5) aufzuwickeln;
- den auf den Formkern (5) zu einer Wellenwicklung aufgewickelten Wickeldraht (9) in der Transportrichtung (X) parallel zur Wickelachse (A) mittels der Transporteinrichtung der Wellenwickelvorrichtung zu transportieren;
- die Breite des Formkerns (5) mittels der Verstelleinrichtung zu verändern; und
- die Schritte des Zuführens, Aufwickelns, Transportierens und Verändern der Breite des Formkerns (5) zu wiederholen, bis eine vorbestimmte Anzahl von Wellenwicklungen (10) hergestellt wurde.

4. Wellenwickelvorrichtung nach Anspruch 3, wobei die Wellenwickelvorrichtung eingerichtet ist, die Breite des Formkerns (5) jeweils derart zu verändern, dass nach dem Verändern die Breite des Formkerns (5) an einem in der Transportrichtung (X) vorderen Ende eines zu wickelnden Abschnitts von Wellenwicklungen (10) gleich der vorherigen Breite des Formkerns (5) an einem in der Transportrichtung (X) hinteren Ende eines unmittelbar zuvor gewickelten Abschnitts von Wellenwicklungen (10) ist.

5. Wellenwickelvorrichtung nach Anspruch 3 oder 4, wobei nach Herstellen der vorbestimmten Anzahl von Wellenwicklungen (10) die Schritte des Zuführens, Aufwickelns, Transportierens nochmals wiederholt werden, ohne zuvor die Breite des Formkerns (5) zu verändern.

6. Wellenwickelvorrichtung nach mindestens einem der vorangehenden Ansprüche, wobei
- der Formkern (5) ein entlang der Wickelachse (A) verschiebbares Betätigungsbauteil (11) mit einem Betätigungsabschnitt (14) aufweist, welcher mit einer entlang der Wickelachse (A) veränderlichen Breite ausgebildet ist;
- ein in der Breitenrichtung einen Abschluss des Formkerns (5) bildendes erstes Randelement (7) des Formkerns (5) mit dem Betätigungsabschnitt (14) wirkverbunden ist, wobei ein Kontaktpunkt der Wirkverbindung des ersten Randelements (7) an einer ersten Außenkante des Betätigungsabschnitts (14) anliegt; und
- der Betätigungsabschnitt (14) bei einer Verschiebung des Betätigungsbauteils (11) entlang der Wickelachse (A) eine Relativbewegung entlang der Wickelachse (A) zu dem ersten Randelement (7) ausführt, so dass das erste Randelement (7) entsprechend der sich an dem Kontaktpunkt verändernden Breite des Betätigungsabschnitts (14) in der Breitenrichtung bewegt wird, so dass sich die Breite des Formkerns (5) verändert.

7. Wellenwickelvorrichtung nach Anspruch 6, wobei
- der Betätigungsabschnitt (14) mit Bezug zu der Wickelachse (A) spiegelsymmetrisch ausgeführt ist;
- ein in der Breitenrichtung einen Abschluss des Formkerns (5) bildendes zweites Randelement (8) des Formkerns (5) mit dem Betätigungsabschnitt (14) wirkverbunden ist, wobei das zweite Randelement (8) dem ersten Randelement (7) gegenüberliegt und ein Kontaktpunkt der Wirkverbindung des zweiten Randelements (8) an einer der ersten Außenkante gegenüberliegenden zweiten Außenkante des Betätigungsabschnitts (14) anliegt;
- der Betätigungsabschnitt (14) bei einer Verschiebung des Betätigungsbauteils (11) entlang der Wickelachse (A) eine Relativbewegung entlang der Wickelachse (A) zu dem zweiten Randelement (8) ausführt, so dass das zweite Randelement (8) entsprechend der sich an dem Kontaktpunkt verändernden Breite des Betätigungsabschnitts (14) in der Breitenrichtung bewegt wird, so dass sich im Zusammenspiel mit der Bewegung des ersten Randelements (7) die Breite des Formkerns (5) verändert.

8. Wellenwickelvorrichtung nach mindestens einem der vorangehenden Ansprüche, wobei der Wickeldraht (9) zur Bewicklung des Formkerns (5) in mehreren Strängen durch jeweilige Düsen der wenigstens einen Drahtzuführeinrichtung (26) parallel zugeführt wird.

9. Wellenwickelvorrichtung nach Anspruch 8, wobei ein Abstand zwischen den Düsen der wenigstens einen Drahtzuführeinrichtung (26) veränderbar ist, so dass ein Abstand zwischen den mehreren Strängen einstellbar ist.

10. Wellenwickelvorrichtung nach Anspruch 8 oder 9, aufweisend wenigstens ein Führungselement, welches eingerichtet ist, die mehreren Stränge derart zu führen, dass sich beim Zuführen zur Bewicklung des Formkerns (5) ein Abstand zwischen den mehreren Strängen im Vergleich zu dem Abstand zwischen den Düsen der wenigstens einen Drahtzuführeinrichtung (26) ändert und die mehreren Stränge mit dem veränderten Abstand zueinander aufgewickelt werden.

11. Wellenwickelvorrichtung nach mindestens einem der vorangehenden Ansprüche, aufweisend wenigstens ein Schiebeelement, welches auf den Formkern (5) aufschiebbar ist, um so die Breite des Formkerns (5) zu verändern.

12. Verfahren zur Herstellung von Wellenwicklungen (10), umfassend:
- Bereitstellen einer Wellenwickelvorrichtung mit
- einer Wickeleinheit, welche eine um eine Wickelachse (A) in einer Wickelrichtung (P1) drehbaren Formkern (5) aufweist, und
- wenigstens einer Drahtzuführeinrichtung (26) mit einer Zuführrichtung (Y);
- Zuführen eines Wickeldrahts (9) in der Zuführrichtung (Y) zur Bewicklung des Formkerns (5);
- Aufwickeln des Wickeldrahts (9) auf den Formkern (5) durch Drehen des Formkerns (5);
- Transportieren des auf den Formkern (5) zu einer Wellenwicklung aufgewickelten Wickeldrahts (9) in einer Transportrichtung (X) parallel zur Wickelachse (A) mittels einer Transporteinrichtung der Wellenwickelvorrichtung;
- Verändern der Breite des Formkerns (5) mittels einer Verstelleinrichtung;
- Wiederholen der Schritte des Zuführens, Aufwickelns, Transportierens und Verändern der Breite des Formkerns (5), bis eine vorbestimmte Anzahl von Wellenwicklungen (10) hergestellt wurde.

13. Verfahren nach Anspruch 12, umfassend, nach dem Zuführen des Wickeldrahts (9), Ausbilden von Wickelköpfen (2) durch wechselseitiges axiales Versetzen der parallelen Spulendrähte mittels einer Bewegung der wenigstens einen Drahtzuführeinrichtung (26) in der Transportrichtung (X).

14. Verfahren nach Anspruch 12 oder 13, umfassend, nach dem Herstellen der vorbestimmten Anzahl von Wellenwicklungen (10), Überführen der Wellenwicklungen (10) in ein Übertragungswerkzeug für den Einzug der Wellenwicklungen (10) in Nuten eines Stator- oder Rotorkörpers.
